# EUROPEAN PATENT APPLICATION

(11) **EP 4 063 398 A1**
(43) Date of publication of application: **28.09.2022**
(21) Application number: 22164058.4
(22) Date of filing: 24.03.2022
(51) Int. Cl.: C08B 3/06, C08L 1/12, C08B 15/02, C08L 3/02, C08L 67/04

(54) **PROCESS FOR THE PREPARATION OF BIODEGRADABLE COMPOSITIONS WITH IMPROVED MECHANICAL STRENGTH AND COMPOSITIONS OBTAINED THEREBY**

(30) Priority: 26.03.2021 IT 202100007421
(71) Applicant: SicilBiotech S.r.l., 95127 Catania (IT)
(72) Inventor: Merighi, Roberto, 45025 Via Canal Bianco 1101, Fratta Polesine (RO) (IT); Pecoraro, Giuseppe, 90020 Via S.Agata 9, Vicari (PA) (IT)
(74) Representative: Serravalle, Marco

(57) **Abstract**

The invention is directed to a process for the preparation of a composition for use in the preparation of biodegradable films, the process comprising: subjecting a micronised vegetal fibre comprising at least 40 wt % cellulose, less than 15 wt % lignin and less than 10 wt % humidity, to the following steps: oxidation of the micronised fibre in the presence of an organic or inorganic peroxide; acetylation of the micronised fibre by acetic acid in acidic medium. The treated micronised vegetal fibre is then mixed with a biodegradable polymer in a weight ratio comprised between 10/90 and 50/50.

The invention is also directed to the composition obtainable by said process.

## Description

### Field of the invention

**.** The present invention is directed to a biodegradable polymer comprising materials derived from plant-derived fibres and to the process for the preparation of said biodegradable polymer.

### Background of the invention

**.** The production of biodegradable polymers represents a sector in strong expansion in recent years. The problems of environmental pollution caused by polyethylene (PE) bags made it necessary to replace PE with biodegradable materials so that bags possibly dispersed in the environment are degraded over time. The most commonly used materials for the replacement of PE in bags are Mater-Bi^{®} and PLA (Polylactic Acid). These materials have as a limit the poor mechanical resistance that easily causes the breakage during use.

**.** Many studies have been carried out on the use of Mater-Bi and PLA in combination with natural fibers in an attempt to improve their mechanical properties. V. A. Alvarez et al. "Effects of the Moisture and Fiber Content on the Mechanical Properties of Biodegradable Polymer-Sisal Fiber Biocomposites", J. Appl. Pol. Sc., Vol. 91, 4007-4016 (2004), discloses the effect of moisture and fiber quantity on the mechanical properties of composites of the polymer with agave fibre.

**.** R. Scaffaro et al. "Effect of the Processing Techniques on the Properties of Ecocomposites Based on Vegetable Oil-Derived Mater-Bi" and Wood Flour" J. Appl. Pol. Sc., Vo. 114, 2885-2863 (2009), studies the effect of process techniques for the mixing of Mater-Bi^{®} with wood pulp. This mixture presents an improvement in tensile strength compared to Mater-Bi^{®} alone.

. JP 2020/128513 discloses a composition comprising polylactic acid, and cellulose acetate fibres obtained from bleached softwood kraft pulp (NBKP).

**.** There is therefore still a need to find new mixtures comprising biodegradable polymers and fibres derived from vegetable substances, which mixtures provide a final product with improved mechanical characteristics.

### Summary of the invention

. The present invention is directed to a process for the production of a mixture comprising a biodegradable polymer and a fibre derived from a plant species, comprising the steps of: extracting the plant species to obtain a wood cellulose matrix comprising at least 40% cellulose, lignin in an amount not exceeding 15% by weight and moisture in an amount not exceeding 10 % by weight; treating the mixture thus obtained with an oxidizer; acetylating the product obtained by the oxidation step; mixing the acetylated product with the biodegradable polymer.

**.** The present invention is also directed to the mixture obtained by the process described above, which mixture comprises from 50 to 90 wt % of a biodegradable polymer and from 10 to 50 wt % of a lignocellulosic material treated as described above.

**.** As mentioned above, any source material may be used, provided that it is possible to obtain from it a lignocellulosic matrix containing at least 40% by weight of cellulose, lignin equal to or less than 15% by weight, and humidity equal to or less than 10% by weight. Preferably, the amount of cellulose is about 50% by weight, which means from 45 wt % to 55 wt %. A plant variety suitable as a raw material is Sulla (Hedysarum coronarum), a species commonly cultivated in Italy and which is used as fodder for animals.

**.** A suitable treatment to obtain the lignocellulosic matrix is for example the mechanical grinding of the plant, followed by sieving and micronization, to obtain a micronized fibre that is the starting product for subsequent chemical treatments. The micronized fibre for use in this invention preferably has a weight average particle diameter of less than 500 microns, more preferably from about 100 microns to about 300 microns.

**.** The micronised fibre shall contain a quantity of cellulose equal to or higher than 40 % by weight, lignin less than 15 % by weight and moisture less than 10 % by weight. To make the micronized fibre more compatible with the biodegradable polymer, it is necessary to undergo some treatments. The most commonly used process for the production of wood pulp is the Kraft process which involves treatment of wood chips with a hot mixture of water, sodium hydroxide (NaOH), and sodium sulfide (Na2S). These ingredients are highly aggressive and have a high environmental impact. The process of the present invention is a more environment-friendly and is performed in an acidic medium. A first treatment is oxidation with peroxides (hydrogen peroxide, peracetic acid, and other organic peroxides). The oxidative treatment allows, among other things, to break the phenolic bonds in lignin. The treatment is carried out in an acidic environment (pH between 1 and 5, preferably between 1 and 4). A second treatment to be performed together or after oxidation is acetylation, also to be carried out preferably in an acidic environment (pH between 1 and 5, preferably between 1 and 4). Acetylation is used to increase the solubility of hemicelluloses and thus improve compatibility with the biodegradable polymer.

**.** The use of peracetic acid allows the two-step of oxidation and acetylation to be carried out simultaneously. In fact, peracetic acid oxidizes lignin to acetic acid and, at the same time, provides a weakly acidic environment. The concentration of peroxide used in the oxidation reaction may vary over a wide range, for example between 0.2 % by weight and 20 % by weight, preferably between 0.5 % by weight and 15 % by weight. In terms of molar concentration of the oxidant, the concentration may vary between 0.03 M and 3 M, preferably between 0.07 M and 2 M. The temperature used may also vary in a fairly wide range, for example between 50°C and 100°C, preferably between 60°C and 90°C. The use of temperatures above 100° C obviously requires the use of autoclaves to reach the pressure necessary to maintain water in liquid state at the reaction temperature. However, it has been found out that the reaction is better performed at atmospheric pressure. The reaction time depends on the conditions used and can vary from a few minutes to a few hours, for example from 10' to 2h, preferably from 15' to 1h. The use of mild reaction conditions (e.g. low oxidant concentration and/or temperature) will require a longer reaction time.

**.** As stated above, the treatment is preferably performed at atmospheric pressure. In fact, during the treatment with acid, a gas is formed and it is convenient to operate with a vessel kept at atmospheric pressure, so that the evolved gas can be collected outside the vessel.

**.** As mentioned above, if peracetic acid is used, neither another acid nor an acetylating source need be added. It will be sufficient to add peracetic acid in the quantities indicated above, that is to say at a concentration between 0.2 % by weight and 20 % by weight, preferably between 0.5 % by weight and 15 % by weight. If another oxidizer is used, for example hydrogen peroxide, the oxidation reaction can be carried out at the same time as the acetylation reaction by adding acetic acid and an acid simultaneously to hydrogen peroxide. The amount of acid should be such that the pH is maintained in the range of from 1 to 5, preferably from 1 to 4. The concentration of acetic acid may vary between 0.03 M and 3 M.

**.** Although, as stated above, when operating with peracetic acid no other acid needs to be added, it is possible to add a small amount of a strong acid, such as sulfuric acid. In this case, the amount of acid added is comprised between 0.001 M and 1.00 M

. At the end of the chemical treatments, the reaction mixture is then filtered, preferably rinsed with an inert solvent or water, and added to the biopolymer. Preferably the biopolymer-microfibre mixture is dried in the oven to eliminate water and volatile organic compounds (acetic acid, ethyl acetate) until constant weight is reached.

. The dried mixture can then be processed to obtain a final product such as a film, characterized by improved mechanical strength compared to pure biopolymer and excellent compostability.

. The biopolymer can be selected amongst available biopolymers. The term biopolymer refers to polymers having specific biodegradability characteristics. Examples of biopolymers are polylacyc acid (PLA), Mater-bi ^{®}, which covers a variety of compositions comprising corn starch, vegetable oil derivatives, and biodegradable synthetic polyesters.

### Experimental data

**.** 10 g of micronized vegetable fibres from Hedysarum coronarium (Sulla) were suspended in 20 ml of 2 wt % peracetic acid and vigorously stirred at 70 °C for 60 minutes. The suspension was then poured into ethyl acetate and filtered with paper filter on a Buckner. The retained solid, white, still wet with cellulose acetate was mixed with 30g of Mater-Bi DIOIA and then placed in a stove at 50 °C until constant weight. The resulting mixture was extruded at 160 °C. The resulting polymer had a tensile strength of 45 MPa, more than double that of the original Mater-Bi.

**.** 10 g of micronized vegetable fibres from Hedysarum coronarium (Sulla) were suspended in 20 ml of 15 wt % peracetic acid and placed in an autoclave at 120 °C for 15 minutes and then cooled to room temperature. This suspension was then poured into a second suspension of 30 g of commercial PLA, stirred at room temperature in 50 ml of ethyl acetate. The resulting suspension was then filtered with filter paper on a Buckner; the obtained solid was placed in the stove at 50 °C up to constant weight. The resulting mixture was extruded at 160 °C. The resulting polymer had a tensile strength of 55 MPa, approx. 10% higher than the original PLA.

**.** A sample of vegetable fibres from Hedysarum coronarium (Sulla) dried and cut were micronized to obtain powder with particle size between 100 - 300 um. Approx. 6 grams of powder were loaded into a flask and soaked with 30 ml of commercial peracetic acid at 15-16%, the outgoing gas flow was conveyed into a flask containing water. The system was heated to 125 °C with plate heating, with accessory for 1 L balloons. Already at about 60°C the system emitted visible bubbles in the Erlenmeyer flask. At 90-95°C the mixture clears and fluidizes. The product was filtered to obtain a white mass. The oxidation phase with peracetic acid occurred at atmospheric pressure around 100°C. The product is easily released from the mother water with wet, white and pasty product

## Claims

1. A process for the preparation of a composition for use in the preparation of biodegradable films, the process comprising:
a. Subjecting a micronised vegetal fibre comprising at least 40 wt % cellulose, less than 15 wt % lignin and less than 10 wt % humidity, to the following steps:
i. oxidation in acidic medium of the micronised fibre in the presence of an organic or inorganic peroxide;
ii. acetylation of the micronised fibre by acetic acid in acidic medium;
b. mixing the oxidised and acetylated micronised fibre with a biodegradable polymer in a weight ratio comprised between 10/90 and 50/50.

2. The process of claim 1, wherein the vegetal micronised fibre derives from Hedysarum coronarium.

3. The process of any of claims 1-2, wherein the vegetal fibre contains from 45 wt % to 55 wt % of cellulose.

4. The process of any of claims 1-3, wherein steps i and ii are performed contemporarily.

5. The process of claim 4, wherein steps i and ii are performed by adding peracetic acid to the micronised fibre.

6. The process of any of claims 1-5, wherein steps i and ii are performed at a temperature comprised between 50 and 130 °C.

7. The process of any of claims 1-6, wherein the micronised fibre has an average diameter lower than 500 microns.

8. The process of any of claims 1-7, wherein pH at which steps i and ii are performed is comprised between 1 and 5.

9. The process of any of claims 1-8, further comprising the following step:
c. drying the mixture of step b. in an oven to evaporate organic substances and water present in the mixture.

10. The process of any of claims 1-9, wherein step i) is performed at atmospheric pressure.

11. The process of any of the preceding claims wherein the micronised fibre has an average diameter comprised between 100 microns and 300 microns.

12. The process of any of the preceding claims wherein the biodegradable polymer is selected from polylactic acid and Mater bi^{®}, which is a composition comprising corn starch, vegetable oil derivatives, and biodegradable synthetic polyesters.

13. A composition for use in the preparation of biodegradable films obtainable by the process of claims 1-12.
